# EUROPEAN PATENT SPECIFICATION

(11) **EP 2 292 059 B1**
(45) Date of publication and mention of the grant of the patent: **22.02.2012**
(21) Application number: 08749863.0
(22) Date of filing: 29.04.2008
(51) Int. Cl.: H04W 52/34, H04W 72/14, H04W 72/12, H04W 52/28, H04W 72/00

(54) **DISTRIBUTION OF DOWNLINK E-DCH POWER USAGE**
VERTEILUNG DER ABWÄRTSSTRECKEN-E-DCH-LEISTUNGSBENUTZUNG
DISTRIBUTION D'UTILISATION DE PUISSANCE E-DCH DE LIAISON DESCENDANTE

(43) Date of publication of application: 09.03.2011
(60) Divisional application: 11153133.1
(73) Proprietor: Telefonaktiebolaget L M Ericsson (publ), 164 83 Stockholm (SE)
(72) Inventor: LINDSKOG, JAN, S-435 43 Pixbo (SE); ANDERSSON, Andreas, S-438 35 Landvetter (SE); ANKEL, Per, S-449 36 Nödinge (SE); RANHEIM, Anders, S-416 78 Göteborg (SE); WALLERIUS, Roger, S-433 68 Sävedalen (SE)
(74) Representative: Ekwall, Peter
(86) International application number: PCT/EP2008/055262
(87) International publication number: WO 2009/132699

(56) References cited:
- EP-A- 1 708 383
- EP-A- 1 912 345
- EP-A- 1 914 945
- WO-A-2006/126920
- WO-A-2008/097179
- "3rd Generation Partnership Project; Technical Specification Group Radio Access Network; Medium Access Control (MAC) protocol specification (Release 6)" 3GPP DRAFT; R2-051675 UPDATE TO EUL MAC CR V5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG2_RL2\TSGR2_47\Documents, no. Athens, Greece; 20050509, 13 May 2005 (2005-05-13), XP050128842

## Description

### TECHNICAL FIELD

The present invention relates to a method, a communication system and a Node-B in a communication system for distribution of downlink E-DCH power usage.

### BACKGROUND

There is an increasing need of delivering wireless technology with broadband capacity for cellular networks. A good broadband system must fulfill determined criteria, such as high data rate and capacity, low cost per bit, good Quality of Service and greater coverage. High Speed Packet Access (HSPA) is an example of a network access technology that enables this.

HSPA is a collection of protocols which improves the performance of existing Universal Mobile Communication Systems (UMTS), which is a third generation (3G) cell phone technology. UMTS uses Wideband Code Division Multiple Access (WCDMA) as air interface for the radio-based communication between user equipment (UE), in form of a mobile terminal, and the Node-B (NB). WCDMA is a wideband spread-spectrum air interface that utilizes the direct sequence Code Division Multiple Access (CDMA) signaling method to achieve higher speeds and to support more users.

HSPA is an integral part of WCDMA. Wide-area mobile coverage can be provided with HSPA. It does not need any additional spectrum or carriers. Currently, WCDMA can provide simultaneous voice and data services to users on the same carrier. This also applies to HSPA which means that spectrum can be used efficiently. Simulations show that in a moderately loaded system, HSPA can largely reduce the time it takes to download and to upload large files.

HSPA is the set of technologies defining the migration path of WCDMA operators worldwide. The two existing features, High Speed Downlink Packet Access (HSDPA) and High Speed Uplink Packet Access (HSUPA), in the HSPA family provides the increased performance by using improved modulation schemes and by refining the protocols by which handsets and Node-B's communicate. These improvements lead to better utilization of the existing radio bandwidth provided by UMTS.

High Speed Downlink Packet Access (HSDPA) is the first feature within HSPA. It is part of the WCDMA Third Generation Partnership Project (3GPP) Release 5 specification and all future releases. HSDPA provides a new downlink (DL) transport channel - the High Speed Downlink Shared Channel (HS-DSCH) - that enhances support for high-performance packet data applications. A new Medium Access Control (MAC) sublayer, MAC-hs (high speed), has been introduced which enables a functional split between layers and nodes from different releases of WCDMA. MAC-hs handles HS-DSCH.

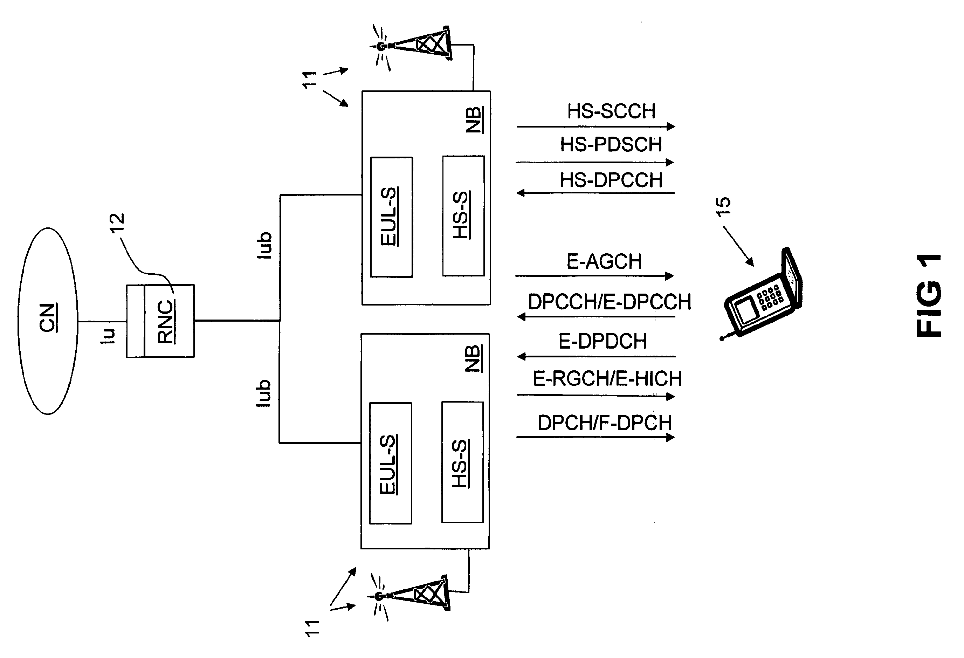

In fig. 1, a HSDPA/HSUPA network overview is indicated. The network comprises a Core Network (CN) communicating with at least one Radio Network Controller (RNC) 12 over the lu interface. At least one Node-B (NB) 11 comprises a EUL scheduler unit EUL-S. The EUL Scheduler is also denoted the MAC-e Scheduler, and communicates with the respective RNC over respective lub interfaces. HSUPA will be described more in detail later. The Node-B also comprises a HSDPA scheduler HS-S. The HSDPA Scheduler is also denoted the MAC-hs Scheduler, and communicates with the RNC over the lub interface.

The following HSDPA channels are transmitted over the air interface:
- HS-SCCH to provide timing and coding information, thus allowing the UE to listen to the HS-PDSCH at the correct time and using the correct codes to allow successful decoding of UE data.
- HS-PDSCH to convey the MAC-hs payload
- HS-DPCCH to convey control signaling of the MAC-hs.

HSDPA is based on shared channel and multi-code transmission. This means that some channel codes and the transmission power in a cell are seen as a common resource that is dynamically shared between users in the time and code domains. This is for a more efficient use of available codes and power resources in WCDMA. It is also based on high-order modulation, in which 16 Quadrature Amplitude Modulation (16QAM) is used to provide higher data rates. HSDPA is further based on fast link adaptation, in which the transmission are adjusted instantaneously to the radio conditions reported by the User Equipment (UE) and when conditions permit, enable high-order parameters modulation.

Another basic principle with HSDPA is fast Hybrid Automatic Repeat Request (HARQ). The UE can combine information from different transmissions of a particular data packet in its decoding of the packet and will indicate the status of the decoding to Node-B, which in case of unsuccessful decoding retransmits the packet. In HSDPA, the Transmission Time Interval (TTI) is 2 ms, which reduces the round-trip time (RTT) for end-user applications. RTT is a measure of the time it takes for a packet to travel from a User Equipment (UE), across a network to e.g. another users' UE, and back.

HS-DSCH is a channel that is shared among all users in a cell. Unlike other channels, HS-DSCH requires a scheduler, the MAC-hs scheduler (HS-S), to determine to which users the Node-B (NB) 11 should transmit data for each TTI. In addition, the MAC-hs scheduler also decides the rate of these transmissions. The fast scheduling algorithms implemented in the MAC-hs scheduler utilize the shared resources in HSDPA in an optimum way.

High Speed Uplink Packet Access (HSUPA) is the second feature within HSPA. It is part of the WCDMA Third Generation Partnership Project (3GPP) Release 6 specification. HSUPA is also called Enhanced Uplink. In HSUPA, a new MAC sublayer, MAC-e, has been introduced which enables a functional split between layers and nodes from different releases of WCDMA. HSUPA provides a new uplink (UL) transport channel called Enhanced Dedicated CHannel (E-DCH) which is handled by MAC-e. HSUPA increases the uplink data rate.

HSUPA gives the possibility to significantly increase the amount of data uploaded over mobile networks, especially user-generated content. Although a majority of the data traffic is downlink (DL) oriented, there are still quite a number of applications that will benefit from an improved uplink. These include the sending of large e-mail attachments, pictures, video clips, blogs etc. HSUPA is also known as Enhanced UL.

One concept of Enhanced Uplink is multi-code transmission, which means that the E-DCH transport channel can be transmitted over several channelization codes, to increase the size of the E-DCH for one UE. Another concept of EUL is a shorter TTI, 2 or 10 ms for the UL. Also HSUPA uses HARQ. The Node-B can request retransmission of erroneously received data. Soft handover is also possible with HSUPA, in contrast to HSDPA.

The following HSUPA channels are transmitted over the air interface:
- The E-AGCH to convey absolute grant signaling from the MAC-e scheduler towards the UEs
- The E-RGCH for relative grant signaling
- E-HICH to convey acknowledgement feedback from Node-B decoding of UE transmitted data
- Dedicated Physical Channel (DPCH) or Fractional DPCH to convey Transmit Power Control (TPC) commands
- Enhanced DPDCH (E-DPDCH) to convey the MAC-e payload
- Enhanced DPCCH (E-DPCCH) to convey the control signaling of the MAC-e.

HSUPA also uses fast scheduling to enable rapid resource reallocation between UEs by exploiting the "burstiness" in packet data transmissions. As a basic principle of the uplink scheduling mechanism, the UE maintains a serving grant which represents the maximum E-DPDCH power the UE can use in its transmissions. The available uplink power determines the possible data rate.

The absolute grant allows the Node-B scheduler to directly adjust the granted rate of UEs under its control. It is used to initialize the serving grant. The relative grants are used to incrementally adjust the UE's serving grants. As an input to the scheduling, UE feedback is required. The UE has the possibility to send scheduling information which provides detailed information about the buffer status in the UE as well as scheduling request, i.e. "lack of resources"/"enough resources". Therefore, the Node-B scheduler can make appropriate scheduling decisions.

The amount of common uplink resources a terminal is using depends on the data rate used. Generally, the higher the data rate, the larger the required transmission power and thus the higher the resource consumption. Packet data applications are typically bursty in nature with large and rapid variations in their resource requirements. Hence, the overall target of the MAC-e scheduler, which controls when and at what rate a UE is transmitting, is to allocate a large fraction of the shared resource to users momentarily requiring high data rates, while at the same time ensuring stable system operation by avoiding large interference peaks.

HSDPA/HSUPA scheduling is provided by the scheduler entities (MAC-hs and MAC-e schedulers) located in the Node-B, close to the air interface.

The behavior of the MAC-hs (HS-S) and the MAC-e (EUL-S) schedulers is not described in the 3GPP standard. Scheduling in this scheme does not require standardization. In addition, scheduling is dependent on the type of service that an operator offer its customers which may vary from operator to operator. The other parts of the HSDPA and HSUPA, such as the rest of the Layer 2 processing and Layer 1 coding (according to the Open System Interconnection - OSI) are described in detail in 3GPP.

In existing systems, the scheduler (either MAC-hs, MAC-e or both) may base its decisions on the current radio conditions on the air, traffic properties, current amount of data in the queues for different users, remaining power, user equipment (UE) 15 capabilities, priorities between the users, how long the data has been stored in the queues, errors when sending previous data etc. To assist the MAC-hs and MAC-e schedulers with some of these information, 3GPP states that the UEs 15 must report their experienced radio conditions with channel quality indicator (CQIs) to the Node-B (NB) 11'. For each data package that the UE receives, an HARQ Acknowledgement/No acknowledgement (NACK/ACK) report is also provided if it was able to successfully decode the data or not.

MAC-hs (HS-S) scheduler utilizes the available DL power headroom (available WCDMA resources) to schedule HS-PDSCH. It is obvious that if the available DL power headroom is high then the probability increases to provide a high end-user transmission rate, or to allow for multiple UEs to transmit data, and vice versa.

The details of the scheduler algorithms in the MAC-e (EUL-S) and MAC-hs (HS-S) schedulers are Node-B (NB) 11 vendor specific, and it is very difficult to predict the scheduling complexity of each Node-B. However, independent of the details of these algorithms, the MAC-hs scheduler requires significant processing capabilities for every vendor of the Node-B. Especially with the success of HSDPA in mind. The amount of users is likely to increase and scheduling will become increasingly important in order to keep the perception of the wireless HSDPA quality high among all users.

With this in mind, every Node-B (NB) vendor will start its processing algorithms prior to the scheduling transmit interval. Most likely this interval can be from one TTI up to several TTI dependent on the amount of supported UEs and complexity of the scheduling algorithm.

Moreover, the scheduling task complexity increases if input parameters such as power headroom, input buffer data and CQI parameters varies during the scheduling procedure. There will also exist a time period prior to the exact scheduling transmit interval when the input data must be fixed and not changed. Furthermore, it will also be appreciated that there may exist a period prior to said time period where pre-scheduling may be performed.

Similar to the MAC-hs scheduler, the MAC-e scheduler must also start its scheduling task ahead of the actual E-AGCH and E-RGCH transmission.

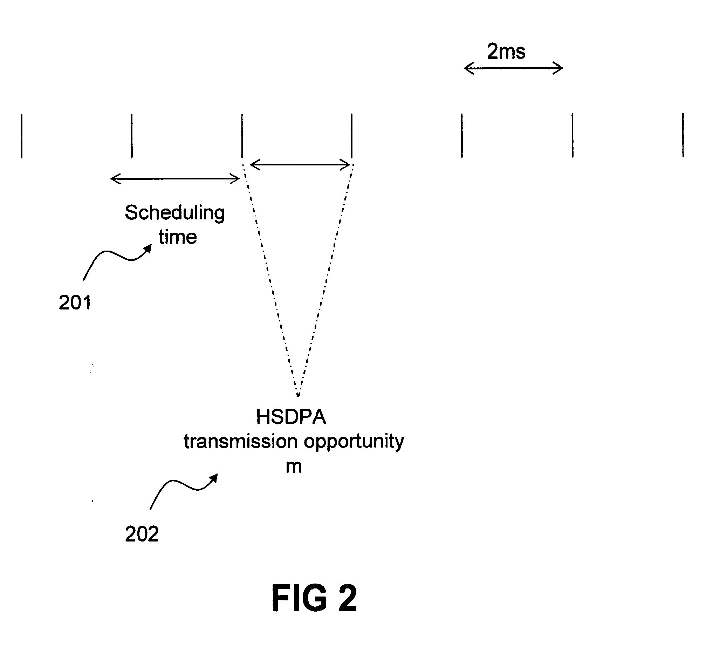

Figure 2 shows the scheduling time 201 for one HSDPA transmission opportunity 202, denoted *m*. The transmission is on the HS-DSCH channel. This is repeated for each TTI. Assume now that when the scheduling time starts in the EUL part of the Node B, that the reported DL E-DCH power usage is zero. This is because no E-DCH transmissions were ongoing at the start of the scheduling time 201 period. The MAC-hs scheduler (HS-S) then schedules a transmission where all remaining power is assumed for a HSDPA transmission at time *m* 202.

Assume further that the MAC-e scheduler (HS-S) schedules an E-AGCH that coincides with time *m* 202. It can be concluded that the DL power headroom is not sufficient for the scheduled transmission and it is likely that the UE 15 fails to decode the resulting Node-B (NB) 11 transmitted HS-DSCH data.

EP 1914945 A discloses a mobile communication system configured to control a transmission rate of user data to be transmitted from a mobile station to a radio base station via an uplink transmission rate allocation shared physical control channel, and to transmit user data from the radio base station to the mobile station via a downlink shared physical data channel, where the transmission power resource allocated to the downlink shared physical data channel is limited.

WO 2006/126920 A relates to communication system comprising a node B having a downlink data scheduler and an uplink data scheduler.

The document "3GPP; Technical Specification Group Radio Access Network; MAC protocol specification (Release 6), 3GPP DRAFT; R2-051675 UPDATE, 13 May 2005", disclose functions for a communication system.

WO 2008/097179 A discloses a radio access network comprising a radio network controller and a radio base station relating to a high speed shared channel.

### SUMMARY

The object of the present invention is therefore to achieve a better knowledge in the MAC-hs scheduler about the available DL power headroom when scheduling HSDPA transmissions in order to provide the end user with higher bandwidth and/or lower latency.

The above object is achieved by the method of claim 1 and the product of claim 10. Preferred embodiments are defined in the dependent claims.

With a more precise knowledge about available DL power headroom in the HSDPA scheduler the probability increases that end user will perceive higher bandwidth and/or lower latency. The available DL power headroom can be used more efficiently by the MAC-hs scheduler. This is especially useful when the E-DCH transmission changes .rapidly, e.g. a measured value as in prior art can differ from the actual utilization of power. This will in turn increase the likelihood of selecting larger transport blocks on the air, thereby also improving both cell and user throughput. Instead of informing the HSDPA scheduler what power levels that have been used for the DL transmission on the E-DCH physical channels, the EUL scheduler informs about the forthcoming power levels.

Further advantages will appear for the embodiment in the detailed description.

### BRIEF DESCRIPTION OF DRAWINGS

In the following text the invention will be described in detail with reference to the attached drawings. These drawings are used for illustration only and do not in any way limit the scope of the invention:
Figure 1 shows a HSUPA/HSDPA network overview.
Figure 2 shows the scheduling time for one HSDPA transmission opportunity.
Figure 3 shows a first flow diagram for a first and second embodiment of the present invention.
Figure 4 shows a second flow diagram for the first embodiment of the present invention.
Figure 5 shows a second flow diagram for the second embodiment of the present invention.
Figure 6 shows a third flow diagram for the second embodiment of the present invention.
Figure 7 shows the E-HICH power estimation according to a third, fourth and fifth embodiment of the present invention.
Figure 8 shows a flow diagram for the third embodiment of the present invention.
Figure 9 shows a flow diagram for the fourth embodiment of the present invention.
Figure 10 shows a flow diagram for the fifth embodiment of the present invention.
Figure 11 shows a flow diagram over the general concept of the present invention.

### DETAILED DESCRIPTION

The invention will now be described in detail with reference to embodiments described in the detailed description and shown in the drawings. The embodiments of the invention with further developments described in the following are to be regarded only as examples and are in no way to limit the scope of the protection provided by the patent claims.

The present invention relates to a method, a communication system and a Node-B in a communication system for distribution of downlink (DL) E-DCH power usage. The Node-B and the communication system comprise a mechanism for performing the method steps as described in the method. It should therefore be understood by a person skilled in the art that the fact that the Node-B and the communication system performs the method step means that the method embodiment described in the detailed description also includes the Node-B and the communication system, which comprises this mechanism though not described in detail herein.

Figure 1 shows a HSUPA/HSDPA network overview. A user terminal (UE) 15 communicates with the core network (CN) via at least one Node-B (NB) 11. A radio network controller (RNC) 12 establishes an E-DCH and a HS-DSCH, which enables uplink and downlink data traffic between the user terminal and the Node-B. At least one Node-B 11 is present in the network, see figure. The present invention focuses on the activities in at least one Node-B in the network.

For HSDPA, soft handover is not supported, which means that the UE 15 can only exist in one HSDPA scheduler context at a time. For E-DCH, soft handover is supported, which means that the particular UE can exist in different EUL scheduler contexts at the same time.

Note that the descriptive text below describes traffic to and from, the user terminal (UE) 15. However, it will be appreciated by those skilled in the art that the traffic to and from one user terminal can be from one or multiple queues (e.g. multiples MAC-d flows).

The present invention relates to a method for distribution of downlink (DL) E-DCH power usage in a communication system. The system comprises, see figure 1, a least one radio network controller (RNC) 12, and at least one Node-B (NB) 11 for enabling wireless communication with at least one user terminal (UE) 15.

The communication is enabled via an enhanced dedicated transport channel (E-DCH) and one high speed downlink shared channel (HS-DSCH) for uplink (UL) and downlink (DL) data traffic between the user terminal (UE) (15) and the Node-B (NB) 11. The RNC 12 in the system establishes E-DCH and HS-DSCH), which enables the communication.

The Node-B (NB) 11 comprises a HSDPA scheduler (HS-S) scheduling the data rate for the DL data traffic via the HS-DSCH. The HSDPA scheduler before every new 2 ms Transmit Time Interval (TTI) (there are only 2 ms TTI in HSDPA while in EUL both 2 and 10 ms TTI are present) controls to which user terminals DL data is queued in the Node-B. Thereafter, the scheduler decides which UE or UEs that should receive data first. At first, the scheduler signals via the HS-SCCH channel, see figure 1, for which UE 15 the data is intended. Then the data traffic is sent on the HS-PDSCH channel. This is performed before every new TTI. Consequently, the HSDPA scheduler actively controls the data rate for every new TTI.

In contrast, a EUL scheduler (EUL-S) schedules the maximum data rate for the UL data traffic via the E-DCH. In practice, the data rate is scheduled by a power rate for the uplink transmissions. The EUL-S is part of the Node-B 11. This means that it is close to the air interface, for instance WCDMA in HSUPA. It operates on a request-grant principle. The user terminal (UE) 15 requests a permission to send data and the scheduler decides when and how much data a user terminal is allowed to send (maximum data rate), and also how many user terminals that will be allowed to do so. The EUL-S triggers E-AGCH/E-RGCH grant transmissions to the user terminal, but the decoding and the actual transmission of E-AGCH/E-RGCH is handled within the Node-B.

HSUPA provides a new uplink (UL) transport channel called Enhanced Dedicated CHannel (E-DCH) which is handled by MAC-e. HSUPA increases the uplink data rate. The HSUPA channels are: (1) E-AGCH to convey absolute grant signaling from the MAC-e scheduler towards the UEs , (2) E-RGCH for relative grant signaling ; E-HICH to convey acknowledgement feedback from Node-B decoding of UE transmitted data , (3) Dedicated Physical Channel (DPCH) or Fractional DPCH to convey Transmit Power Control (TPC) commands , (4) Enhanced DPDCH (E-DPDCH) to convey the MAC-e payload and (5) Enhanced DPCCH (E-DPCCH) to convey the control signaling of the MAC-e.

HSUPA also uses fast scheduling to enable rapid resource reallocation between UEs by exploiting the "burstiness" in packet data transmissions. As a basic principle of the uplink scheduling mechanism, the UE maintains a serving grant which represents the maximum E-DPDCH power the UE can use in its transmissions. The available uplink power determines the possible data rate. E-HICH is the downlink physical channel carrying the uplink E-DCH hybrid ARQ acknowledgement indicatoris. It is used by Node-B 11 to send HARQ NACK/ACK messages back to the UE 15.

The EUL-S and the HS-S are located in the Node-B 11 (NB) in order to move processing closer to the air interface and to be able to react faster on the radio link situation. A particular task of the schedulers is to control the uplink and the downlink decoding and encoding resources, which the user terminal 15 is using.

The scheduling enables the system to admit a larger number of high-data rate users, and rapidly adapt to interference variations in the cell. This leads to an increase both in capacity and the likelihood that a user will experience high data rates. It also enables the system to control that the cell interference are not so high that it causes disturbances in the cell. The details of scheduling will not be described further in this document since it is known from existing solutions and not part of the invention.

The MAC-hs scheduler (HS-S) requires significant processing capabilities for every vendor of the Node-B. Especially with the success of HSDPA in mind, scheduling will become increasingly important in order to keep the perception of the wireless HSDPA quality high among every user. The MAC-hs scheduler will start its processing algorithms prior to the scheduling transmit interval. Most likely this interval can be from one TTI up to several TTI dependent on the amount of supported UEs and complexity of the scheduling algorithm.

There will therefore exist a time period (scheduling time) prior to the exact scheduling transmit interval when the input data must be fixed and not changed. Similar to the MAC-hs scheduler, the MAC-e scheduler (EUL-S) must also start its scheduling task ahead of the actual E-AGCH and E-RGCH transmission. Assume now that when the scheduling time starts in the EUL part of the Node B, that the reported DL E-DCH power usage is zero. This is because no E-DCH transmissions were ongoing at the start of the scheduling time period. The MAC-hs scheduler (HS-S) then schedules a transmission where all remaining power is assumed for a HSDPA transmission at time m.

Assume further that the MAC-e scheduler (HS-S) schedules an E-AGCH that coincides with time m. The details for how to resolve the problem varies from vendor to vendor, but it can be concluded that the DL power headroom is not sufficient for the scheduled transmission and it is likely that the UE 15 fails to decode the resulting Node-B (NB) 11 transmitted HS-DSCH data.

In order to solve these problems the invention is characterized in that the Node-B (NB) 11 estimates 403,404,603,604,608,809,906,106,111 the power consumption and/or the corresponding transmission time for at least one forthcoming E-DCH DL transmission on at least one E-DCH physical channel. The Node-B (NB) then sends 403,405,603,609,811,908,108,112 the estimated power consumption and/or the corresponding transmission time information to the HSDPA scheduler (HS-S) prior to the E-DCH DL transmission. An E-DCH DL transmission is the transmission performed by the Node-B (EUL-S) on any of the E-DCH physical channels in order to inform the UE or UEs 15.

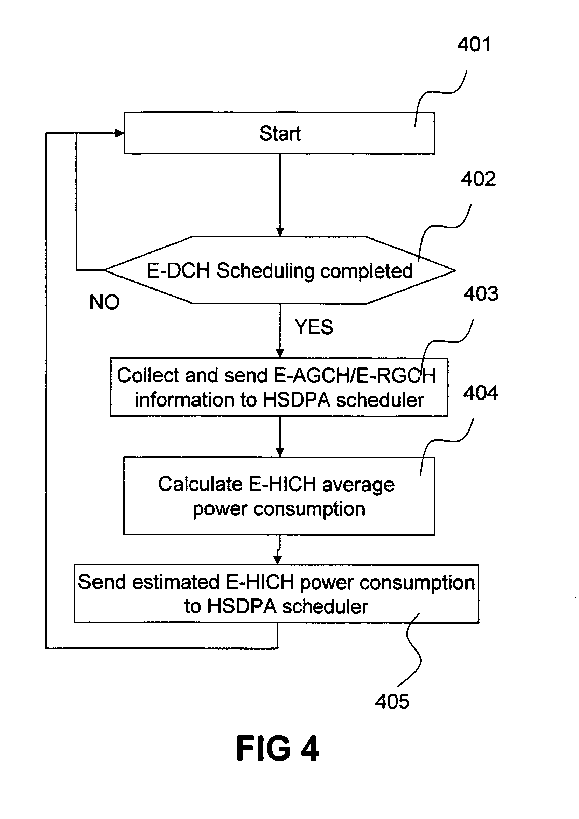

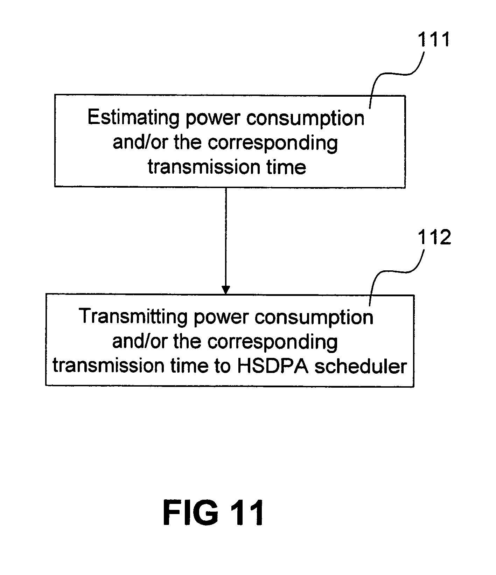

Figure 11 shows a flow diagram over the general concept of the present invention. In box 111 the power consumption and/or the corresponding transmission time is estimated while in box 112 the information is sent to the HSDPA scheduler (HS-S). The estimated DL power consumption and/or the corresponding transmission time of the E-DCH physical channel (E-AGCH, E-RGCH and E-HICH) for forthcoming transmission periods are reported prior to the actual E-DCH transmission to the HSDPA scheduler (HS-S), which uses available DL power headroom for MAC-hs scheduling. The estimation will be described in relation to different embodiments shown in figures 4,6,8,9 and 10.

With a more precise knowledge about available DL power headroom and/or the corresponding transmission time in the HSDPA scheduler the probability increases that end user will perceive higher bandwidth and/or lower latency. The available DL power headroom can be used more efficiently by the MAC-hs scheduler. This is especially useful when the E-DCH transmission changes rapidly, e.g. a measured value as in prior art can differ from the actual utilization of power. This will in turn increase the likelihood of selecting larger transport blocks on the air, thereby also improving both cell and user throughput. Instead of informing the HSDPA scheduler what power levels that have been used for the E-DCH DL transmission on the E-DCH physical channels, the EUL scheduler informs about the forthcoming power levels.

The EUL scheduler (EUL-S) in the Node-B (NB) 11 may send the estimated power consumption and/or the corresponding transmission time information. It may as an alternative be sent from another entity located outside the EUL scheduler (EUL-S) within the Node-B (NB) 11. Furthermore, the EUL scheduler (EUL-S) may estimate the power consumption and/or the corresponding transmission time or the other entity located outside the EUL scheduler (EUL-S) within the Node-B (NB) 11 may estimate the power consumption and/or the corresponding transmission time. The other entity is preferably located within the same Node-B (NB) 11 as the EUL scheduler.

This also means that the estimation can be performed by the EUL scheduler (EUL-S) and that the estimated power consumption and/or the corresponding transmission time information can be sent from the other entity or vice verse. The knowledge of used DL power or estimated use of DL power together with the corresponding transmission time could consequently be located outside the EUL scheduler and therefore this information shall be sent from any entity aware of the DL power situation for the E-DCH physical channel/-s (the E-AGCH, E-RGCH and E-HICH) towards the HSDPA scheduler

The Node-B (NB) 11 could estimate the power consumption and/or the corresponding transmission time for more than one E-DCH DL transmission. It will be appreciated by those skilled in the art that the meaning of the word *forthcoming* depends upon the scheduling mechanism, i.e. if the scheduling is made for one transmission interval at a time *forthcoming* refer to the next transmission interval, likewise if the scheduling is made for several transmission intervals *forthcoming* refer to the same amount of transmission intervals.

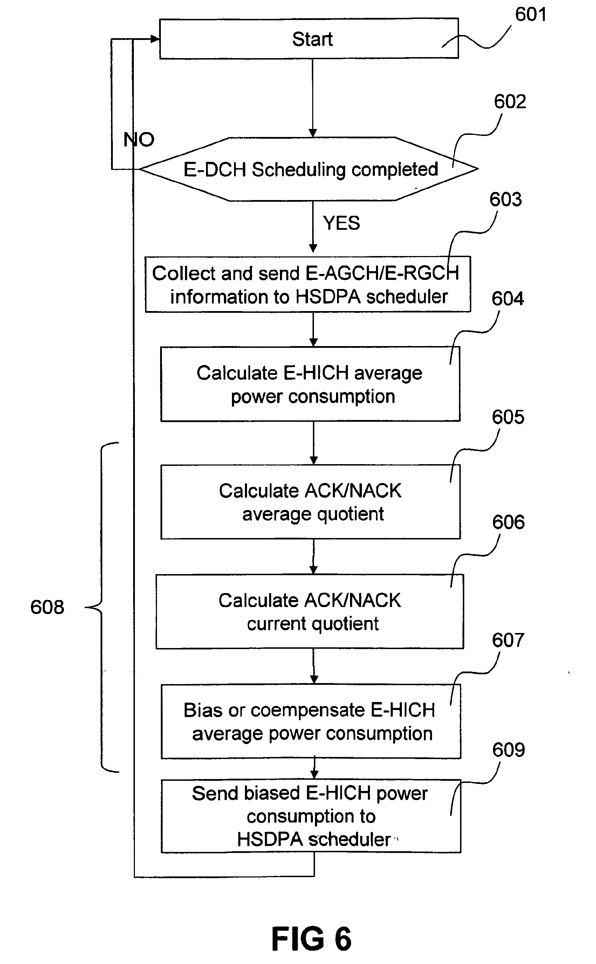

Transmission and corresponding power usage on E-AGCH and E-RGCH are known as soon as a scheduling decision is taken (some time before transmission). Node-B (NB) 11 may therefore estimate 403,603 (see figure 4 and 6) the power consumption and/or the corresponding transmission time on the Enhanced Absolute Grant Channel (E-AGCH) and/or the Enhanced Relative Grant Channel (E-RGCH) by collecting the power consumption and/or the corresponding transmission time information as soon as the EUL scheduler (EUL-S) has taken a scheduling decision. The estimated power consumption and/or the corresponding transmission time information are then sent to the HSDAP scheduler (HS-S).

The E-DCH scheduler continuously sends E-AGCH and E-RGCH power information and the corresponding transmission time to HSDPA scheduler (HS-S). As described above, as soon as the 'decision is taken' to transmit a E-DCH DL transmission, e.g. an E-AGCH to an UE 15, UEx, at time y or an E-RGCH to and UE, UEz, at time w, the corresponding power and transmission time information of the E-AGCH and E-RGCH information can be sent. The algorithms for setting the E-AGCH and E-RGCH power levels are not in the scope of this invention.

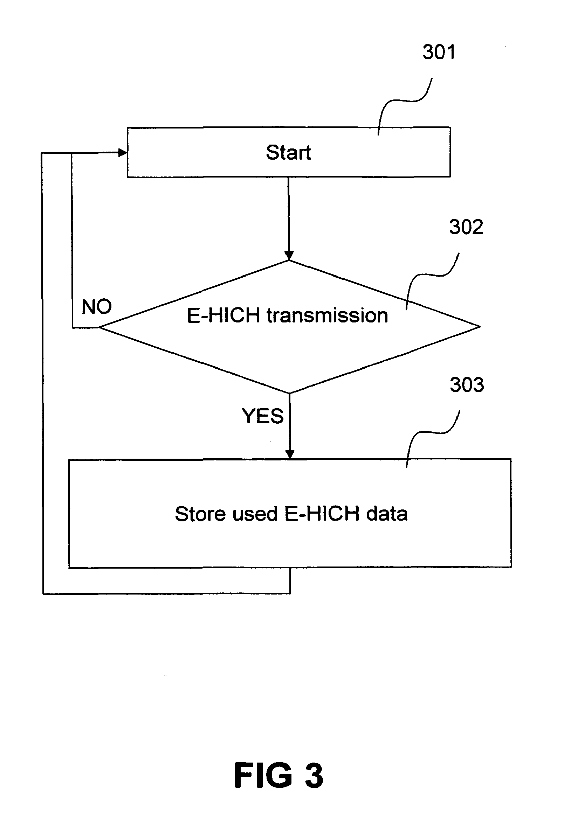

E-HICH power usage is known a very short time before the actual transmission and for this an estimate according to any of the embodiments described below will be used. These embodiments are also illustrated in figures 3-10.

In accordance with the first and second embodiment, see figure 4 and 6, the Node-B (NB) 11 estimates the power consumption on the E-DCH Hybrid Automatic Repeat Request (HARQ) Acknowledgement Indicator Channel (E-HICH) by calculating 404,604 a first average value for the power consumption. This is made after the E-DCH scheduling is completed 402,602. The Node-B (NB) calculates this first average value using stored E-HICH power consumption values and the corresponding transmission time information for the E-DCH DL transmission of E-HICH.

Both in the first and second embodiment, see figure 3, the Node-B (NB) 11 stores 303 the E-HICH power consumption value and the corresponding transmission time information for the E-DCH DL transmission are stored 303 when detecting that a E-DCH DL transmission is made on the E-HICH channel. Node-B detects when a transmission is made on E-HICH and the power consumption is stored together with a timestamp in a list.

Note that a Node-B may send E-HICH upon more than one cell. It will be appreciated by those skilled in the art that scheduling of DL power headroom is made per cell in both the HSDPA scheduler (HS-S) and the EUL scheduler (EUL-S).

In the second embodiment, see figure 6, the estimation of the first average value for the power consumption on E-HICH is biased, or compensated, by also including a sliding average of the quotient Negative acknowledgement Acknowledgement (NACK/ACK). The averages of NACK and ACK shall utilize the same averaging period. The quotient NACK/ACK with a smaller averaging period is also included. In the second embodiment we utilize the simple knowledge that a transmitted NACK will result in a retransmission from the UE, unless an adjacent Node-B acknowledges the transmission. A person skilled in the art will appreciate that Node-B has knowledge whether a UE is in soft handover state or not (i.e. due to RNC RIPU - Radio Interface Parameter Update ctrl signalling).

In particular, in the second embodiment, when the first average value for the power consumption for E-HICH has been calculated, the Node-B (NB) 11 estimates 608 the power consumption by performing the following steps:
1. Calculating 605 a second average value for the quotient between an E-HICH Negative ACK (NACK) and Acknowledgement (ACK) for a'first time period.
2. Calculating 606 a third average value for the quotient between a E-HICH Negative ACK (NACK) and Acknowledgement (ACK) for a second time period being smaller than the first time period,
3. Biasing or compensating 607 the first average value for the power consumption for the E-HICH using the quotient between the second average value and the third average value for the quotient between an E-HICH Negative ACK (NACK) and Acknowledgement (ACK).

E.g. if the quotient second average value is higher than 1, a compensation factor higher than 1 is used, and vice versa when quotient is less than 1.

The first time period in this second embodiment is the same as the time period for the calculation of the first average value 604. With the steps 608 in the second embodiment, the different quotients between the second and third average values for the first and second time periods are compared. This gives the advantage that the power calculated 404,604 using the first average value can be weighted.

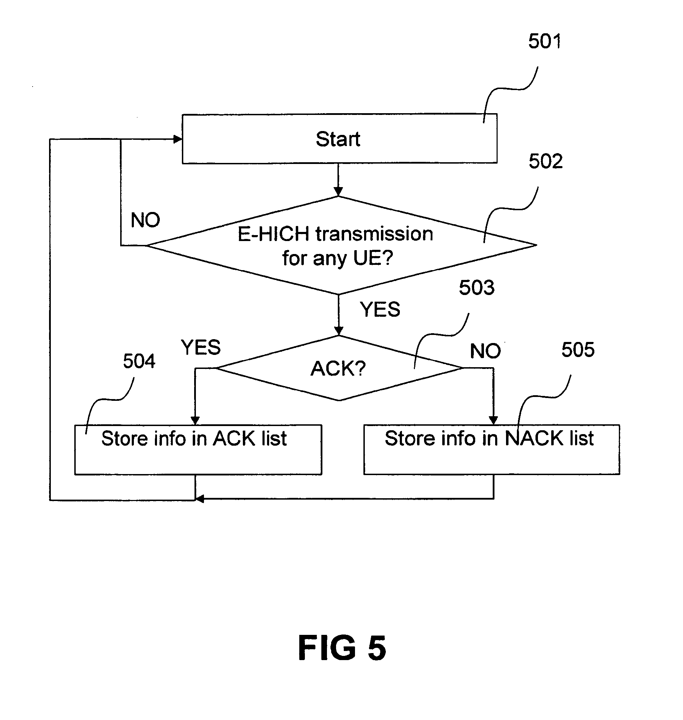

In the second embodiment, the Node-B (NB) 11 calculates 604, see figure 5, the first average value using stored E-HICH ACK or NACK power consumption transmit attempt values and the corresponding transmission time information for the E-DCH DL transmission. The Node-B (NB) stores 504,505 the E-HICH, either ACK or NACK, power consumption values and the corresponding transmission time information for the E-DCH DL transmission when detecting that an E-DCH DL transmission is made on the E-HICH channel. Node-B detects when a transmission is made on E-HICH and the power consumption is stored together with a timestamp in a list. Note that a Node-B may send E-HICH upon more than one cell. The scheduling and the transmission power estimation are made per cell.

Both in the first and second embodiment, see figures 4 and 6, Node-B (NB) 11 finally sends (405,609) the estimated power consumption by sending the first average value or biased first average value for the power consumption for the E-HICH to the HSDPA scheduler (HS-S). The estimation 403,404,604,608 of the power consumption is preceded by the awaiting 402,602 of the completed E-DCH scheduling.

The fact that the Node-B estimates and sends the power consumption and/or the corresponding transmission time means that the Node-B at least estimates and sends one of the information parts. The most important is to inform that HSDPA scheduler that something is about to happen, so that the scheduler can consider this when scheduling a DL transmission

It will be appreciated by those skilled in the art that the information comprised in step 403 and 603, i.e. E-AGCH and E-RGCH information, may represent E-DCH DL transmissions that will affect more than one HSDPA transmission opportunity (step 202). E.g. for the case when EUL-S schedules E-DCH DL transmissions for a time longer than 2 ms. It may also be that the actual EUL-S scheduling decision does not coincide with the start of the scheduling time (step 201). Both situations above represent a situation when the actual transmission time for E-RGCH and E-AGCH is fixed, but the information is not useful until it coincide with the corresponding HSDPA transmission time.

A person skilled in the art will appreciate that the information comprised in step 403 and 603 could be stored or buffered in EUL-S until start of corresponding HSDPA scheduling time (step 201), i.e. until the E-DCH DL transmission coincide with HSDPA transmission opportunity (step 202). By storing the information until the start of HS-S scheduling time (201) the algorithms for E-AGCH and E-RGCH power setting could work longer.

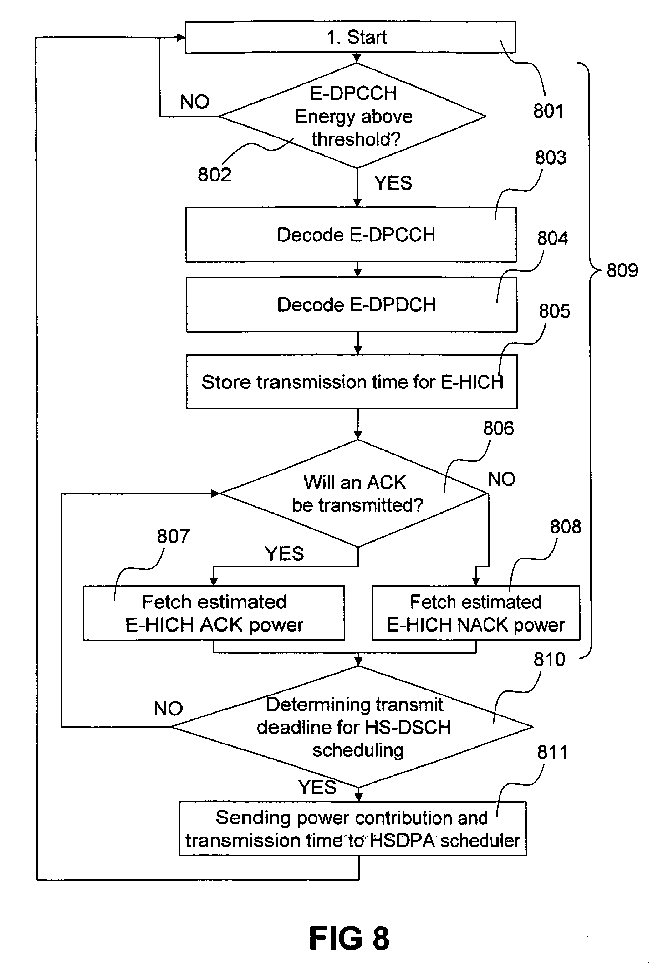

In the third, fourth and fifth embodiments, see figures 8-10, E-DPCCH and eventually E-DPDCH is detected and used to estimate the power consumption and/or the corresponding transmission time on E-HICH in order to derive the HSDPA scheduling headroom. A detection is made upon UL E-DPCCH which explicitly informs that a transmission will occur on E-DCH E-HICH.

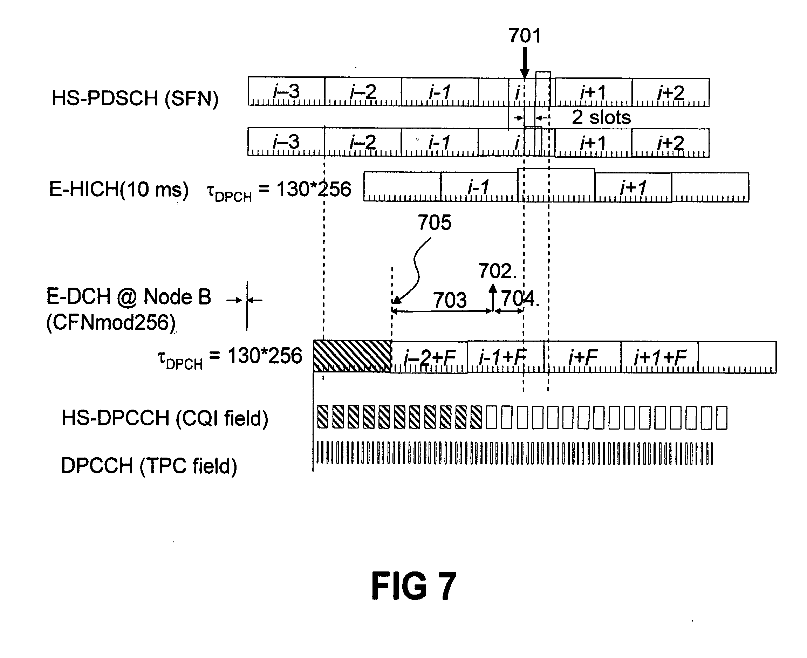

The basis for these embodiments is illustrated in figure 7. The HSDPA has to decide on the scheduling at time 701. Before the decision, the Node-B needs to provide 702 the HSDPA scheduler (HS-S) with the estimated power consumption on E-HICH. The estimation according to these three embodiments takes place in the time period 703. After the HSDPA scheduler has received the estimated power consumption there needs to be a delay 704, which is further restricts the total time available for providing 702 the estimate. The time period 703 cannot start earlier that the E-DCH scheduling decision 705. The delay is also illustrated in figure 2 as the scheduling time 201 for one HSDPA transmission opportunity 202, denoted m. This is to provide that the MAC-hs scheduler (HS-S) schedules a transmission where the right amount of power is assumed for a HSDPA transmission at time m 202. Note that for embodiments 3,4,5 steps 810, 907 and 107 (se figure 8 - 10) refer to the same time, e.g. the time is determined by the HSDPA scheduler.

Three flow diagrams will now describe the internal steps taken in Node-B in which E-HICH power consumption values and/or the corresponding transmission time are estimated 703 per UE and transmitted 703 to the HSDPA scheduler (HS-S). Each of the flow diagrams represents three possible solutions. Note that all three embodiments may be present simultaneously, dependent on timing of the E-DCH channels for each UE with respect to the provide time 702. E.g. there may exist time for Node-B to perform embodiment three for a first UE 15, but only embodiment 5 for a second UE and so forth.

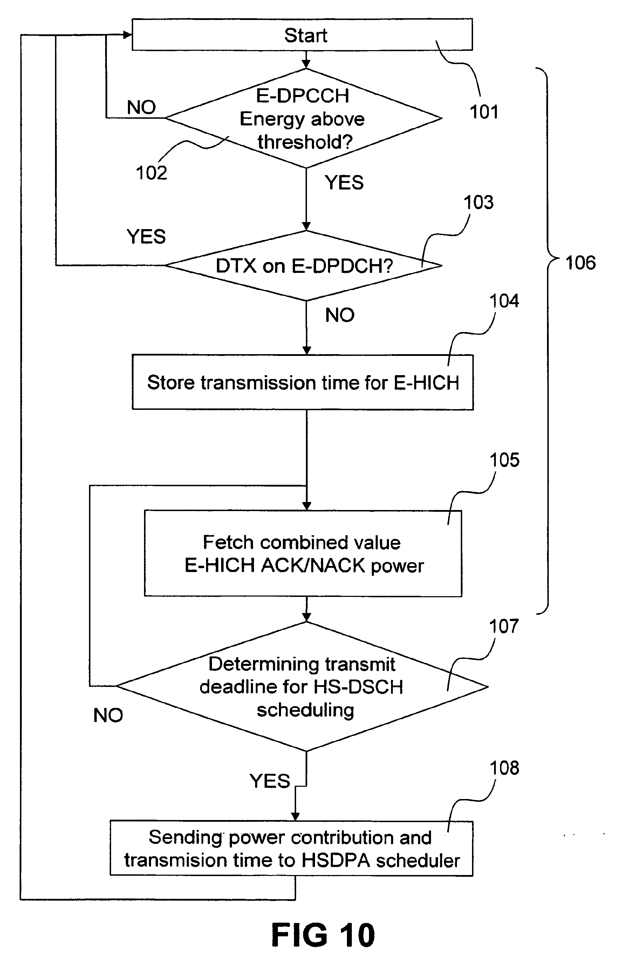

The third embodiment, figure 8, represents the most effective solution, but it is also the solution with highest requirement upon reaction times. The fifth embodiment, figure 10, represent the least efficient solution but with the lowest requirement upon reaction times. Steps 1,2,3 of each solution below describe the internal behaviour of Node-B in order to estimate E-HICH power.

In all three embodiment according to figure 8 .- 10 the Node-B (NB) 11 estimates 809,906,106 the power consumption and/or the corresponding transmission time on the E-DCH Hybrid Automatic Repeat Request (HARQ) Acknowledgement Indicator Channel (E-HICH) by performing the following steps:
1. Awaiting the reception 802,902,102 of the Enhanced Downlink Physical Control Channel (E-DPCCH).
2. Storing 805,904,104 a determined transmission time for a E-DCH DL transmission on an E-DCH Hybrid Automatic Repeat Request (HARQ) Acknowledgement Indicator Channel (E-HICH).
3. Determining 810,907,107 the deadline where the HSDPA scheduler (HS-S) must collect (fetch) the estimated power consumption and/or the corresponding transmission time for E-HICH in order to schedule the data rate for the DL data traffic via the HS-DSCH.

The deadline is determined by the delay 704, see figure 7, which is also illustrated in figure 2 as the scheduling time 201 for one HSDPA transmission opportunity 202, denoted m. This is to provide that the MAC-hs scheduler (HS-S) schedules a transmission where the right amount of power is assumed for a HSDPA transmission at time m 202.

Step 2 is performed by determining the Cell System Frame Number (SFN) and the slot number where the transmission of E-HICH will occur.

In the third and fourth embodiment, figure 8-10, the Node-B (NB) 11 decodes 803,903 the content of E-DPCCH before storing 805,904 the determined transmission time.

In the fifth embodiment, figure 10, the Node-B (NB) 11 instead detects (103) the Discontinuous Transmission (DTX) before storing 104 the determined transmission time. This embodiment illustrates a situation where Node-B (NB) does not have time to decode E-DPCCH, and instead performs a DTX detection of E-DPDCH, which can e.g. be performed during some of the first slots of the E-DPDCH to save time.

In the third embodiment, the Node-B (NB) 11 also decodes 804 the content of a received Enhanced Downlink Physical Dedicated Channel (E-DPDCH) before storing 805 the determined transmission time.

The three embodiments describe different ways to estimate the power consumption and/or the corresponding transmission time on E-HICH. In the third embodiment, see figure 8, the Node-B (NB) 11 performs the following steps after storing the determined transmission time:
1. Determining 806 whether it as an Acknowledgement (ACK) or a Negative ACK (NACK) that will be transmitted in the E-DCH DL transmission on the E-HICH.
2. Fetching 807,808 the latest available estimated power consumption for the ACK or NACK that will be transmitted.

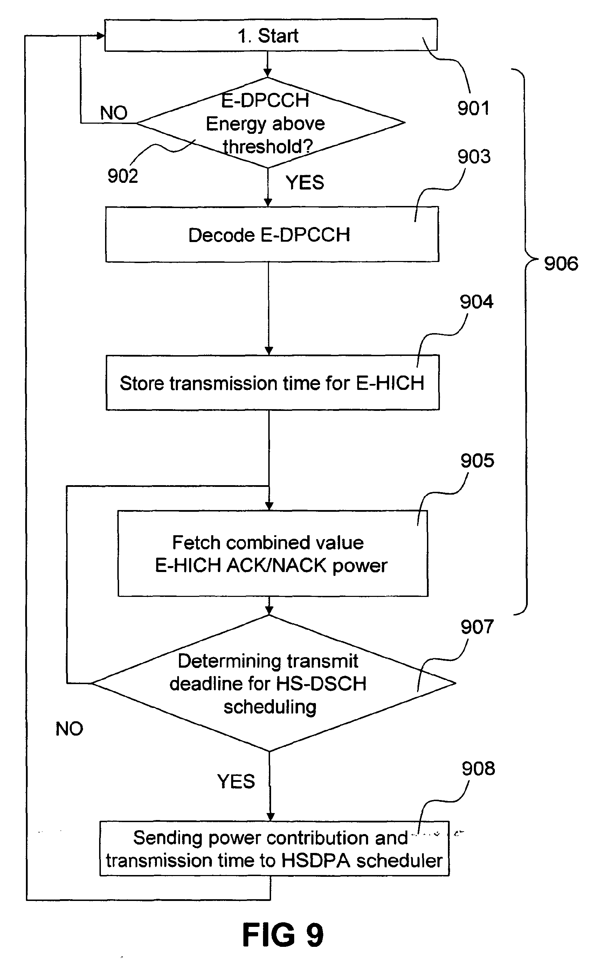

In the fourth and fifth embodiment, see figure 9-10, the Node-B (NB) 11 performs the following step after storing the determined transmission time:
Fetching 905,105 the combined value of the latest available power consumption for the ACK or NACK that will be transmitted in the E-DCH DL transmission on the E-HICH.

This is used when Node-B cannot determine whether it is an ACK or a NACK that will be transmitted in the E-DCH DL transmission.

When an ACK is transmitted a certain power is used, which not necessarily needs to be the same power used when sending a NACK. In order to know if it is an ACK or a NACK that is transmitted, E-DPCCH and E-DPDCH has to be decoded. This is described in the third embodiment and illustrated in figure 8.

If there is no time to decode E-DPDCH, E-DPCCH is still decoded which gives the information that either an ACK or a NACK will be transmitted together with information about the estimated, combined power consumption. This is described in the fourth embodiment and illustrated in figure 9.

In the fifth embodiment it is detected if there is energy on the E-DPCCH and the E-DPDCH, above a certain threshold. A detection that the energy is below this threshold is called a DTX detection. This refers to NO in step 103. In this case time is saved since no decoding of E-DPCCH and/or E-DPDCH is needed. If there is energy on both E-DPCCH and E-DPDCH above the threshold it can be assumed that there will be an E-HICH transmission. Note that for embodiments 3,4,5 steps 810, 907 and 107 refer to the same time, e.g. the time is determined by the HSDPA scheduler.

In all the three embodiments according to figure 8-10, Node-B (NB) 11 finally sends the estimated power consumption and/or the corresponding transmission time information for all E-HICH contributors to the HSDPA scheduler (HS-S). All contributors mean all UE's that an E-HICH transmission is sent to, and the power consumption is estimated by summing up the power consumption from the different contributors.

The estimated power consumption and/or the corresponding transmission time for the different E-DCH channels (E-AGCH, E-RGCH, E-HICH) is sent to the HSDPA scheduler (HS-S). The Node-B (NB) (11) can estimate the power consumption and/or the corresponding transmission time per UE (15).The HSDPA scheduler (HS-S) then uses the estimated power consumption and/or the corresponding transmission time when scheduling the data rate for the DL data traffic via the HS-DSCH.

The third, fourth and fifth embodiments are different methods for estimating the power consumption and/or the corresponding transmission time of the E-HICH DL transmission. The steps according the boxes 404,405,604,605,606,607 and 609 in the first and second embodiments are not performed in these three embodiments. Instead of using statistical information (first and second embodiment) physical channel data is now used, which informs that a transmission will take place.

In the third, the fourth and the fifth embodiment the E-DPCCH channel and the E-DPDCH channel (in the third embodiment) are continuously decoded. The E-DPCCH channel arriving from an EU 15 gives information 805,904,104 about the transmission time for E-HICH. Information from ACK and NACK E-DPCCH is then used to estimate the power consumption for the DL scheduled transmission. In the third embodiment, ACK and NACK can be controlled separately (the exact content of E-HICH is determined), since both E-DPCCH and E-DPDCH has been decoded.

A loop control, see figure 8, of the power consumption 808 - 810 - 806 - 808 - 810 is performed if a NACK will be sent on E-HICH. The loop control for ACK instead contains 807 - 810 - 806 - 807 - 810. A similar loop is performed in figure 9 and 10 with the difference that NACK/ACK is not controlled. These loops continuous until the deadline is reached 810,907,107 when the HSDPA scheduler (HS-S) needs the information (see figure 7). Then the information about the power consumption and/or the corresponding transmission time information for the E-HICH NACK or ACK are sent to the HS scheduler (HS-S).

The fact that the Node-B estimates and sends the power consumption and/or the corresponding transmission time means that the Node-B at least estimates and sends one of the information parts. The most important is to inform that HSDPA scheduler that something is about to happen, so that the scheduler can consider this when scheduling a DL transmission.

The loop control provides all the available time for the estimation of the power consumption. The calculation of the power consumption can continue as long as the deadline is not reached. This improves the estimation. In order to calculate the power consumption Channel Quality Estimate (CQI) and Transmit Power Control (TPC) is used.

At reception of HS-DPCCH (if present) CQI information will be decoded and its information can be used in algorithms to calculate E-HICH power values. Subsequently, at reception of TPC on DPCCH, TPC (Transmit Power Control) can be used in algorithm to calculate E-HICH power values. The details of these algorithms are out of scope for this invention. It should only be assumed that an algorithm exists that may utilize the information from the CQI/TCP collection, which calculates the required power value for E-HICH. The algorithms are assumed to predict separate power values for ACK and NACK on E-HICH transmissions.

CQI informs the Node-B (NB) 11 how the UE 15 percept the surrounding. It can be CQI can for instance be divided in "bad", "normal/good" and "very good". TPC is a method where the UE and/or the Node-B instructs the other one to raise or lower the transmit power. These mechanisms can be used to achieve good power estimation for the E-DCH DL transmissions to the UE.

The estimation of E-HICH according to figure 3-10 can be performed per UE. For all these embodiments, the E-AGCH and E-RGCH estimate of the power consumption is made independently of the E-HICH estimate. The estimated power consumption for these two channels can be sent as soon as the EUL scheduler (EUL-S) has made its scheduling decision. On the contrary, the estimation of the E-HICH power consumption must be sent at the latest when the deadline arrives for sending information to the HSDPA scheduler (HS-S).

It should be understood by a person skilled in the art that the communication system wherein the method and the Node-B are implement for distribution of downlink E-DCH power usage, can also be a 4G (fourth generation) or LTE (Long Term Evolution) system.

## Claims

1. Method for distribution of downlink E-DCH power usage in a communication system comprising at least one Node-B, NB, (11) enabling wireless communication with at least one user terminal, UE, (15),
the communication being enabled via an enhanced dedicated transport channel, E-DCH, and one high speed downlink shared channel, HS-DSCH, for uplink, UL, and downlink, DL, data traffic between the user terminal, UE, (15) and the Node-B, NB, (11),
the Node-B, NB, (11) comprising a HSDPA scheduler, HS-S, for scheduling the data rate for the DL data traffic via the HS-DSCH and an EUL scheduler, EUL-S, for scheduling the maximum data rate for the UL data traffic via the E-DCH,
the Node-B, NB, (11) estimating (403, 404, 603, 604, 608, 809, 906, 106, 111) the power consumption and/or the corresponding transmission time for at least one forthcoming E-DCH DL transmission on at least one E-DCH physical channel,
the Node-B, NB, (11) sending (403,405,603,609,811,908,108,112) the estimated power consumption and/or the corresponding transmission time information to the HSDPA scheduler HS-S, prior to the E-DCH DL transmission
**characterized in that**
said at least one forthcoming E-DCH DL transmission on at least one E-DCH physical channel is a E-DCH Hybrid Automatic Repeat Request, HARQ, Acknowledgement Indicator Channel, E-HICH and
the Node-B, NB (11) estimates (404,604) the power consumption on the E-HICH by calculating a first average value for the power consumption.

2. Method according to claim 1 wherein the EUL scheduler, EUL-S, or an entity located outside the EUL scheduler, EUL-S, within the Node-B, NB, sends the estimated power consumption and/or the corresponding transmission time information.

3. Method according to any of the preceding claims wherein the EUL scheduler, EUL-S, or an entity located outside the EUL scheduler, EUL-S, within the Node-B, NB, estimates the power consumption and/or the corresponding transmission time.

4. Method according to any of the preceding claims wherein the Node-B, NB, (11) estimates the power consumption and/or the corresponding transmission time for more than one E-DCH DL transmission.

5. Method according to any of the preceding claims wherein the Node-B, NB, (11) estimates (403,603) the power consumption and/or the corresponding transmission time on the Enhanced Absolute Grant Channel, E-AGCH, and/or the Enhanced Relative Grant Channel, E-RGCH,by collecting the power consumption and/or the corresponding transmission time as soon as the EUL scheduler, EUL-S has taken a scheduling decision.

6. Method according to any of the preceding claims wherein the Node-B, NB, (11) calculates (404) the first average value using stored E-HICH power consumption values and the corresponding transmission time information for the E-DCH DL transmission of E-HICH.

7. Method according to any of the preceding claims wherein the Node-B, NB, (11) sends (405,609) the estimated power consumption by sending the first average value or biased first average value for the power consumption for the E-HICH to the HSDPA scheduler, HS-S.

8. Method according to any of the preceding claims wherein the HSDPA scheduler, HS-S, uses the estimated power consumption and/or the corresponding transmission time when scheduling the data rate for the DL data traffic via the HS-DSCH.

9. Method according to any of the preceding claims wherein the estimation (403,404,604,608) of the power consumption and/or the corresponding transmission time is preceded by the awaiting (402,602) of the completed E-DCH scheduling.

10. Node-B, NB, (11) for distribution of downlink E-DCH power usage, the Node-B being located in a communication system for enabling wireless communication with at least one user terminal, UE, (15),
where the communication is enabled via an enhanced dedicated transport channel, E-DCH, and one high speed downlink shared channel, HS-DSCH, for uplink, UL, and downlink, DL, data traffic between the user terminal, UE, (15) and the Node-B, NB, (11),
where the Node-B, NB, (11) comprises a HSDPA scheduler, HS-S, for scheduling the data rate for the DL data traffic via the HS-DSCH and an EUL scheduler, EUL-S, for scheduling the maximum data rate for the UL data traffic via the E-DCH,
where the Node-B, NB, (11) comprises a mechanism for estimating (403, 404, 603, 604, 608, 809, 906, 106, 111) the power consumption and/or the corresponding transmission time for at least one forthcoming E-DCH DL transmission on at least one E-DCH physical channel,
where the Node-B, NB, (11) further comprises a mechanism for sending (403,405,603,609,811,908,108,112) the estimated power consumption and/or the corresponding transmission time information to the HSDPA scheduler, HS-S, prior to the E-DCH DL transmission,
**characterized in that**
said at least one forthcoming E-DCH DL transmission on at least one E-DCH physical channel is a E-DCH Hybrid Automatic Repeat Request, HARQ, Acknowledgement Indicator Channel, E- HICH and
the Node-B, NB, (11) estimates (404, 604) the power consumption on the E-HICH by calculating a first average value for the power consumption.

11. Node-B, NB, (11) according to claim 10 wherein the EUL scheduler, EUL-S, or an entity located outside the EUL scheduler, EUL-S, within the Node-B, NB, comprises a mechanism for sending the power consumption and/or the corresponding transmission time.

12. Node-B, NB, (11) according to any of the claims 10 - 11- wherein the EUL scheduler, EUL-S, or an entity located outside the EUL scheduler, EUL-S, within the Node-B, NB, comprises a mechanism for estimating the power consumption and/or the corresponding transmission time.

13. Node-B, NB, (11) according to any of the claims 10 - 12 wherein the Node-B, NB, (11) comprises a mechanism for estimating the power consumption and/or the corresponding transmission time for more than one E-DCH DL transmission.

14. Node-B, NB, (11) according to any of the claims 10 - 13 wherein the Node-B, NB, (11) comprises a mechanism for estimating (403,603) the power consumption and/or the corresponding transmission time on the Enhanced Absolute Grant Channel, E-AGCH, and/or the Enhanced Relative Grant Channel, E-RGCH, by collecting the power consumption and/or the corresponding transmission time as soon as the EUL scheduler, EUL-S, has taken a scheduling decision.

15. Node-B, NB, (11) according any of the claims 10 - 14 wherein the Node-B, NB, (11) comprises a mechanism for calculating (404) the first average value using stored E-HICH power consumption values and the corresponding transmission time information for the E-DCH DL transmission of E-HICH.

16. Node-B, NB, (11) according to any of the claims 10 - 15 wherein the Node-B, NB, (11) comprises a mechanism for sending (405,609) the estimated power consumption by sending the first average value or biased first average value for the power consumption for the E-HICH to the HSDPA scheduler, HS-S.

17. Node-B, NB, (11) according to any of the claims 10 - 16wherein the HSDPA scheduler, HS-S_{,} comprises a mechanism for using the estimated power consumption and/or the corresponding transmission time when scheduling the data rate for the DL data traffic via the HS-DSCH.

18. Node-B, NB, (11) according to any of the claims 10 - 17 wherein the estimation (403,404,604,608) of the power consumption and/or the corresponding transmission time is preceded by the awaiting (402,602) of the completed E-DCH scheduling.

19. Communication system for distribution of downlink E-DCH power usage, comprising at least one Node-B according to any of claims 10 - 18.

## Patentansprüche

1. Verfahren zum Verteilen der E-DCH-Leistungsnutzung auf der Abwärtsstrecke in einem Kommunikationssystem, das mindestens einen B-Knoten, NB, (11) umfasst, der eine drahtlose Verbindung mit mindestens einem Benutzerendgerät, UE, (15) ermöglicht,
wobei die Verbindung über einen erweiterten dedizierten Transportkanal, E-DCH, und einen gemeinsamen Abwärtskanal mit hoher Geschwindigkeit, HS-DSCH, für den Datenverkehr auf der Aufwärtsstrecke, UL, und auf der Abwärtsstrecke, DL, zwischen dem Benutzerendgerät, UE, (15) und dem B-Knoten, NB, (11) freigeschaltet wird,
wobei der B-Knoten, NB, (11) ein HSDPA-Steuerprogramm, HS-S, zum Planen der Übertragungsgeschwindigkeit für den DL-Datenverkehr über den HS-DSCH und ein EUL-Steuerprogramm, EUL-S, zum Planen der maximalen Übertragungsgeschwindigkeit für den UL-Datenverkehr über den E-DCH umfasst,
wobei der B-Knoten, NB, (11) den Energieverbrauch und/oder die entsprechende Übertragungsdauer für mindestens eine anstehende E-DCH-DL-Übertragung auf mindestens einem physikalischen E-DCH-Kanal schätzt (403, 404, 603, 604, 608, 809, 906, 106, 111),
wobei der B-Knoten, NB, (11) die geschätzten Informationen über den Energieverbrauch und/oder die entsprechende Übertragungsdauer an das HSDPA-Steuerprogramm, HS-S, vor der E-DCH-DL-Übertragung sendet (403, 405, 603, 609, 811, 908, 108, 112),
**dadurch gekennzeichnet, dass** die mindestens eine anstehende E-DCH-DL-Übertragung auf mindestens einem physikalischen E-DCH-Kanal eine hybride automatisierte E-DCH-Wiederholungsanfrage, HARQ, [auf] einem Bestätigungsindikatorkanal, E-HICH, ist, und der B-Knoten, NB, (11) den Energieverbrauch auf dem E-HICH schätzt (404, 604), indem er einen ersten Durchschnittswert für den Energieverbrauch berechnet.

2. Verfahren nach Anspruch 1, wobei das EUL-Steuerprogramm, EUL-S, oder eine Entität, die sich außerhalb des EUL-Steuerprogramms, EUL-S, innerhalb des B-Knotens, NB, befindet, die geschätzten Informationen über den Energieverbrauch und/oder die entsprechende Übertragungsdauer sendet.

3. Verfahren nach einem der vorhergehenden Ansprüche, wobei das EUL-Steuerprogramm, EUL-S, oder eine Entität, die sich außerhalb des EUL-Steuerprogramms, EUL-S, innerhalb des B-Knotens, NB, befindet, den Energieverbrauch und/oder die entsprechende Übertragungsdauer schätzt.

4. Verfahren nach einem der vorhergehenden Ansprüche, wobei der B-Knoten, NB, (11) den Energieverbrauch und/oder die entsprechende Übertragungsdauer für mehr als eine E-DCH-DL-Übertragung schätzt.

5. Verfahren nach einem der vorhergehenden Ansprüche, wobei der B-Knoten, NB, (11) den Energieverbrauch und/oder die entsprechende Übertragungsdauer auf dem erweiterten absoluten Zugriffsgenehmigungskanal, E-AGCH, und/oder dem erweiterten relativen Zugriffsgenehmigungskanal, E-RGCH, schätzt (403, 603), indem er den Energieverbrauch und/oder die entsprechende Übertragungsdauer erhebt, sobald das EUL-Steuerprogramm, EUL-S, eine Planungsentscheidung getroffen hat.

6. Verfahren nach einem der vorhergehenden Ansprüche, wobei der B-Knoten, NB, (11) den ersten Durchschnittswert berechnet (404), indem er gespeicherte Werte des E-HICH-Energieverbrauchs und die Informationen über die entsprechende Übertragungsdauer für die E-DCH-DL-Übertragung des E-HICH verwendet.

7. Verfahren nach einem der vorhergehenden Ansprüche, wobei der B-Knoten, NB, (11) den geschätzten Energieverbrauch sendet (405, 609), indem er den ersten Durchschnittswert oder einen verzerrten ersten Durchschnittswert für den Energieverbrauch für den E-HICH an das HSDPA-Steuerprogramm, HS-S, sendet.

8. Verfahren nach einem der vorhergehenden Ansprüche, wobei das HSDPA-Steuerprogramm, HS-S, den geschätzten Energieverbrauch und/oder die entsprechende Übertragungsdauer verwendet, wenn es die Übertragungsgeschwindigkeit für den DL-Datenverkehr über den HS-DSCH plant.

9. Verfahren nach einem der vorhergehenden Ansprüche, wobei vor der Schätzung (403, 404, 604, 608) des Energieverbrauchs und/oder der entsprechenden Übertragungsdauer das Abwarten (402, 602) der beendeten E-DCH-Planung erfolgt.

10. B-Knoten, NB, (11) zum Verteilen der E-DCH-Leistungsnutzung auf der Abwärtsstrecke, wobei sich der B-Knoten in einem Kommunikationssystem befindet, um eine drahtlose Verbindung mit mindestens einem Benutzerendgerät, UE, (15) zu ermöglichen,
wobei die Verbindung über einen erweiterten dedizierten Transportkanal, E-DCH, und einen gemeinsamen Abwärtskanal mit hoher Geschwindigkeit, HS-DSCH, für den Datenverkehr auf der Aufwärtsstrecke, UL, und auf der Abwärtsstrecke, DL, zwischen dem Benutzerendgerät, UE, (15) und dem B-Knoten, NB, (11) freigeschaltet wird,
wobei der B-Knoten, NB, (11) ein HSDPA-Steuerprogramm, HS-S, zum Planen der Übertragungsgeschwindigkeit für den DL-Datenverkehr über den HS-DSCH und ein EUL-Steuerprogramm, EUL-S, zum Planen der maximalen Übertragungsgeschwindigkeit für den UL-Datenverkehr über den E-DCH umfasst,
wobei der B-Knoten, NB, (11) einen Mechanismus zum Schätzen (403, 404, 603, 604, 608, 809, 906, 106, 111) des Energieverbrauchs und/oder der entsprechenden Übertragungsdauer für mindestens eine anstehende E-DCH-DL-Übertragung auf mindestens einem physikalischen E-DCH-Kanal umfasst,
wobei der B-Knoten, NB, (11) ferner einen Mechanismus zum Senden (403, 405, 603, 609, 811, 908, 108, 112) der geschätzten Informationen über den Energieverbrauch und/oder die entsprechende Übertragungsdauer an das HSDPA-Steuerprogramm, HS-S, vor der E-DCH-DL-Übertragung umfasst,
**dadurch gekennzeichnet, dass** die mindestens eine anstehende E-DCH-DL-Übertragung auf mindestens einem physikalischen E-DCH-Kanal eine hybride automatisierte E-DCH-Wiederholungsanfrage, HARQ, ein Bestätigungsindikatorkanal, E-HICH, ist, und der B-Knoten, NB, (11) den Energieverbrauch auf dem E-HICH schätzt (404, 604), indem er einen ersten Durchschnittswert für den Energieverbrauch berechnet.

11. B-Knoten, NB, (11) nach Anspruch 10, wobei das EUL-Steuerprogramm, EUL-S, oder eine Entität, die sich außerhalb des EUL-Steuerprogramms, EUL-S, innerhalb des B-Knotens, NB, befindet, einen Mechanismus zum Senden des Energieverbrauchs und/oder der entsprechenden Übertragungsdauer umfasst.

12. B-Knoten, NB, (11) nach einem der Ansprüche 10 bis 11, wobei das EUL-Steuerprogramm, EUL-S, oder eine Entität, die sich außerhalb des EUL-Steuerprogramms, EUL-S, innerhalb des B-Knotens, NB, befindet, einen Mechanismus zum Schätzen des Energieverbrauchs und/oder der entsprechenden Übertragungsdauer umfasst.

13. B-Knoten, NB, (11) nach einem der Ansprüche 10 bis 12, wobei der B-Knoten, NB, (11) einen Mechanismus zum Schätzen des Energieverbrauchs und/oder der entsprechenden Übertragungsdauer für mehr als eine E-DCH-DL-Übertragung umfasst.

14. B-Knoten, NB, (11) nach einem der Ansprüche 10 bis 13, wobei der B-Knoten, NB, (11) einen Mechanismus umfasst, um den Energieverbrauch und/oder die entsprechende Übertragungsdauer auf dem erweiterten absoluten Zugriffsgenehmigungskanal, E-AGCH, und/oder dem erweiterten relativen Zugriffsgenehmigungskanal, E-RGCH, zu schätzen (403, 603), indem er den Energieverbrauch und/oder die entsprechende Übertragungsdauer erhebt, sobald das EUL-Steuerprogramm, EUL-S, eine Planungsentscheidung getroffen hat.

15. B-Knoten, NB, (11) nach einem der Ansprüche 10 bis 14, wobei der B-Knoten, NB, (11) einen Mechanismus umfasst, um einen ersten Durchschnittswert zu berechnen (404), indem er gespeicherte Werte des E-HICH-Energieverbrauchs und die Informationen über die entsprechende Übertragungsdauer für die E-DCH-DL-Übertragung des E-HICH verwendet.

16. B-Knoten, NB, (11) nach einem der Ansprüche 10 bis 15, wobei der B-Knoten, NB, (11) einen Mechanismus umfasst, um den geschätzten Energieverbrauch zu senden (405, 609), indem er den ersten Durchschnittswert oder einen verzerrten ersten Durchschnittswert für den Energieverbrauch für den E-HICH an das HSDPA-Steuerprogramm, HS-S, sendet.

17. B-Knoten, NB, (11) nach einem der Ansprüche 10 bis 16, wobei das HSDPA-Steuerprogramm, HS-S, einen Mechanismus umfasst, um den geschätzten Energieverbrauch und/oder die entsprechende Übertragungsdauer zu verwenden, wenn es die Übertragungsgeschwindigkeit für den DL-Datenverkehr über den HS-DSCH plant.

18. B-Knoten, NB, (11) nach einem der Ansprüche 10 bis 17, wobei vor der Schätzung (403, 404, 604, 608) des Energieverbrauchs und/oder der entsprechenden Übertragungsdauer das Abwarten (402, 602) der beendeten E-DCH-Planung erfolgt.

19. Kommunikationssystem zum Verteilen der E-DCH-Leistungsnutzung auf der Abwärtsstrecke, umfassend mindestens einen B-Knoten nach einem der Ansprüche 10 bis 18.

## Revendications

1. Procédé de distribution de l'utilisation de puissance E-DCH de liaison descendante dans un système de communication comprenant au moins un noeud B, NB, (11) permettant une communication sans fil avec au moins un terminal utilisateur, UE, (15),
dans lequel la communication est activée par l'intermédiaire d'une voie de transport spécialisée améliorée, E-DCH, et une voie partagée de liaison descendante à vitesse élevée, HS-DSCH, pour le trafic de données de liaison montante, UL, et de liaison descendante, DL, entre le terminal utilisateur, UE, (15) et le noeud B, NB, (11),
dans lequel le noeud B, NB, (11) comprend un planificateur HSDPA, HS-S, pour planifier la vitesse de transmission de données pour le trafic de données DL par l'intermédiaire de la HS-DSCH, et un planificateur EUL, EUL-S, pour planifier la vitesse de transmission de données maximale pour le trafic de données UL par l'intermédiaire de l'E-DCH,
dans lequel le noeud B, NB, (11) estime (403, 404, 603, 604, 608, 809, 906, 106, 111) la puissance consommée et/ou le temps de transmission correspondant pour au moins une transmission DL E-DCH à venir sur au moins une voie physique E-DCH,
dans lequel le noeud B, NB, (11) envoie (403, 405, 603, 609, 811, 908, 108, 112) les informations estimées concernant la puissance consommée et/ou le temps de transmission correspondant au planificateur HSDPA, HS-S, avant la transmission DL E-DCH,
**caractérisé en ce que** ladite au moins une transmission DL E-DCH à venir sur au moins une voie physique E-DCH est une demande de répétition automatisée hybride E-DCH, HARQ, [sur] une voie d'indicateur de confirmation, E-HICH, et le noeud B, NB, (11) estime (404, 604) la puissance consommée sur l'E-HICH en calculant une première valeur moyenne pour la puissance consommée.

2. Procédé selon la revendication 1, dans lequel le planificateur EUL, EUL-S, ou une entité située en dehors du planificateur EUL, EUL-S, à l'intérieur du noeud B, NB, envoie les informations estimées concernant la puissance consommée et/ou le temps de transmission correspondant.

3. Procédé selon l'une quelconque des revendications précédentes, dans lequel le planificateur EUL, EUL-S, ou une entité située en dehors du planificateur EUL, EUL-S, à l'intérieur du noeud B, NB, estime la puissance consommée et/ou le temps de transmission correspondant.

4. Procédé selon l'une quelconque des revendications précédentes, dans lequel le noeud B, NB, (11) estime la puissance consommée et/ou le temps de transmission correspondant pour plus d'une transmission DL E-DCH.

5. Procédé selon l'une quelconque des revendications précédentes, dans lequel le noeud B, NB, (11) estime (403, 603) la puissance consommée et/ou le temps de transmission correspondant sur la voie d'autorisation d'accès absolue améliorée, E-AGCH, et/ou la voie d'autorisation d'accès relative améliorée, E-RGCH, en collectant la puissance consommée et/ou le temps de transmission correspondant dès que le planificateur EUL, EUL-S, a pris une décision de planification.

6. Procédé selon l'une quelconque des revendications précédentes, dans lequel le noeud B, NB, (11) calcule (404) la première valeur moyenne en utilisant des valeurs de puissance consommée E-HICH stockées et les informations de temps de transmission correspondant pour la transmission DL E-DCH de l'E-HICH.

7. Procédé selon l'une quelconque des revendications précédentes, dans lequel le noeud B, NB, (11) envoie (405, 609) la puissance consommée estimée en envoyant la première valeur moyenne ou une première valeur moyenne biaisée pour la puissance consommée pour l'E-HICH au planificateur HSDPA, HS-S.

8. Procédé selon l'une quelconque des revendications précédentes, dans lequel le planificateur HSDPA, HS-S, utilise la puissance consommée estimée et/ou le temps de transmission correspondant lorsqu'il planifie la vitesse de transmission de données pour le trafic de données DL par l'intermédiaire de la HS-DSCH.

9. Procédé selon l'une quelconque des revendications précédentes, dans lequel l'estimation (403, 404, 604, 608) de la puissance consommée et/ou du temps de transmission correspondant est précédée de l'attente (402, 602) de la planification E-DCH achevée.

10. Noeud B, NB, (11) pour la distribution de l'utilisation de puissance E-DCH de liaison descendante, le noeud B se trouvant dans un système de communication pour permettre une communication sans fil avec au moins un terminal utilisateur, UE, (15),
dans lequel la communication est activée par l'intermédiaire d'une voie de transport spécialisée améliorée, E-DCH, et une voie partagée de liaison descendante à vitesse élevée, HS-DSCH, pour le trafic de données de liaison montante, UL, et de liaison descendante, DL, entre le terminal utilisateur, UE, (15) et le noeud B, NB, (11),
dans lequel le noeud B, NB, (11) comprend un planificateur HSDPA, HS-S, pour planifier la vitesse de transmission de données pour le trafic de données DL par l'intermédiaire de la HS-DSCH, et un planificateur EUL, EUL-S, pour planifier la vitesse de transmission de données maximale pour le trafic de données UL par l'intermédiaire de l'E-DCH,
dans lequel le noeud B, NB, (11) estime (403, 404, 603, 604, 608, 809, 906, 106, 111) la puissance consommée et/ou le temps de transmission correspondant pour au moins une transmission DL E-DCH à venir sur au moins une voie physique E-DCH,
dans lequel le noeud B, NB, (11) envoie (403, 405, 603, 609, 811, 908, 108, 112) les informations sur la puissance consommée et/ou le temps de transmission correspondant au planificateur HSDPA, HS-S, avant la transmission DL E-DCH,
**caractérisé en ce que** ladite au moins une transmission DL E-DCH à venir sur au moins une voie physique E-DCH est une demande de répétition automatisée hybride E-DCH, HARQ, [sur] une voie d'indicateur de confirmation, E-HICH, et le noeud B, NB, (11) estime (404, 604) la puissance consommée sur l'E-HICH en calculant une première valeur moyenne pour la puissance consommée.

11. Noeud B, NB, (11) selon la revendication 10, dans lequel le planificateur EUL, EUL-S, ou une entité située à l'extérieur du planificateur EUL, EUL-S, à l'intérieur du noeud B, NB, comprend un mécanisme pour envoyer la puissance consommée et/ou le temps de transmission correspondant.

12. Noeud B, NB, (11) selon l'une quelconque des revendications 10 à 11, dans lequel le planificateur EUL, EUL-S, ou une entité située à l'extérieur du planificateur EUL, EUL-S, à l'intérieur du noeud B, NB, comprend un mécanisme pour estimer la puissance consommée et/ou le temps de transmission correspondant.

13. Noeud B, NB, (11) selon l'une quelconque des revendications 10 à 12, dans lequel le noeud B, NB, (11) comprend un mécanisme pour estimer la puissance consommée et/ou le temps de transmission correspondant pour plus d'une transmission DL E-DCH.

14. Noeud B, NB, (11) selon l'une quelconque des revendications 10 à 13, dans lequel le noeud B, NB, (11) comprend un mécanisme pour estimer (403, 603) la puissance consommée et/ou le temps de transmission correspondant sur la voie d'autorisation d'accès absolue améliorée, E-AGCH, et/ou la voie d'autorisation d'accès relative améliorée, E-RGCH, en collectant la puissance consommée et/ou le temps de transmission correspondant dès que le planificateur EUL, EUL-S, a pris une décision de planification.

15. Noeud B, NB, (11) selon l'une quelconque des revendications 10 à 14, dans lequel le noeud B, NB, (11) comprend un mécanisme pour calculer (404) la première valeur moyenne en utilisant des valeurs de puissance consommée E-HICH stockées et les informations de temps de transmission correspondant pour la transmission DL E-DCH de l'E-HICH.

16. Noeud B, NB, (11) selon l'une quelconque des revendications 10 à 15, dans lequel le noeud B, NB, (11) comprend un mécanisme pour envoyer (405, 609) la puissance consommée estimée en envoyant la première valeur moyenne ou une première valeur moyenne biaisée pour la puissance consommée pour l'E-HICH au planificateur HSDPA, HS-S.

17. Noeud B, NB, (11) selon l'une quelconque des revendications 10 à 16, dans lequel le planificateur HSDPA, HS-S, comprend un mécanisme pour utiliser la puissance consommée estimée et/ou le temps de transmission correspondant lorsqu'il planifie la vitesse de transmission de données pour le trafic de données DL par l'intermédiaire de la HS-DSCH.

18. Noeud B, NB, (11) selon l'une quelconque des revendications 10 à 17, dans lequel l'estimation (403, 404, 604, 608) de la puissance consommée et/ou du temps de transmission correspondant est précédée de l'attente (402, 602) de la planification E-DCH achevée.

19. Système de communication pour la distribution de l'utilisation de puissance E-DCH de liaison descendante, comprenant au moins un noeud B selon l'une quelconque des revendications 10 à 18.
